# EUROPÄISCHE PATENTSCHRIFT

(11) **EP 0 940 184 B1**
(45) Veröffentlichungstag und Bekanntmachung des Hinweises auf die Patenterteilung: **28.08.2002**
(21) Anmeldenummer: 99104234.2
(22) Anmeldetag: 03.03.1999
(51) Int. Cl.: B02C 18/22, B29B 9/04, B29B 17/00, B65H 20/02

(54) **Einzugsvorrichtung für einen Folienzerkleinerer**
Feeder means for sheet material granulator
Dispositif d'alimentation pour granulateur de matériau en forme de feuille

(30) Priorität: 06.03.1998 DE 29803922 U
(43) Veröffentlichungstag der Anmeldung: 08.09.1999
(73) Patentinhaber: HOSOKAWA ALPINE Aktiengesellschaft & Co. OHG, 86199 Augsburg (DE)
(72) Erfinder: Hackl, Herbert, 86343 Königsbrunn (DE); Rawein, Arthur, 86438 Kissing (DE)

(56) Entgegenhaltungen:
- DE-U- 8 509 154
- DE-U- 29 803 922
- FR-A- 2 742 074
- US-A- 1 603 639
- US-A- 5 791 247

## Beschreibung

Die Erfindung betrifft eine Einzugsvorrichtung mit einem parallel angeordneten Walzenpaar gleichen Durchmessers, dessen synchron aber in entgegengesetzter Drehrichtung umlaufende Walzen einen Einzugsspalt begrenzen zum Einziehen und Zuführen von Bändern, Folien und Bahnen aus unterschiedlichem Material in einen Folienzerkleinerer, insbesondere einen Schneidgranulator.

Eine derartige Einzugsvorrichtung ist aus dem deutschen Gebrauchsmuster G 85 09 154 U1 bekannt. Bei den gattungsgemäßen Einzugsvorrichtungen besteht das grundsätzliche Problem, daß die eingezogene Folie aufgrund elektrostatischer Aufladung an einer der Einzugswalzen haften bleiben kann und sich um diese schlingt, so daß die Folie nicht mehr dem Folienzerkleinerer zugeführt wird, sondern sich auf der rotierenden Walze aufwickelt. Dadurch ist die Funktion der Einzugswalzen als Zuführung für den Folienzerkleinerer nicht mehr gegeben und es kommt unmittelbar danach zur Störung und dem Stillstand der Einzugsvorrichtung. Dieser nachteilige Effekt ist insbesondere bei der Verarbeitung von sehr dünnen Folien gegeben.

Um das Anhaften und das Aufwickeln der eingezogenen Folie zu vermeiden wurde gemäß G 85 09 154 U1 vorgeschlagen, die Walzen mit einer rauhen Oberfläche und einer wendelförmig verlaufenden Nut auszustatten und unterhalb jeder Walze Düsen anzuordnen, die einen Druckgasstrom über die gesamte Walzenlänge verteilen. Bei der Vorrichtung nach diesem Stand der Technik sind unterhalb der Einzugswalzen je eine Reihe von Abstreifern zu beiden Seiten des Einzugsspaltes angeordnet und unmittelbar bis an die Oberfläche der Walzen herangeführt.

Die Düsen sind dabei zwischen den Einzugswalzen und den Abstreifern angeordnet und leiten den Druckgasstrom hinter den Abstreifern zwischen Einzugswalze und Abstreifer hindurch in den Bereich der Einzugszone. Die Düsenaustritte sind dort relativ weit entfernt von dem Spalt zwischen Einzugswalze und Abstreifer angeordnet, so daß der aus der Düse austretende Gasstrahl erheblich aufgeweitet wird. Dies führt dazu, daß der Strahl noch vor dem Durchtritt durch Einzugswalze und Abstreifer erheblich abgebremst wird und an Druck verliert. Dadurch gelangt nur ein sehr geringer Anteil der Strahlenergie zur Anhebung und Trennung evtl. anhaftender Folien von den Einzugswalzen, vor den Abstreifer. Die Effizienz ist dadurch nur sehr gering, insbesondere ist ein unverhältnismäßig hoher Verbrauch an Druckgas erforderlich, was unweigerlich zu hohen Kosten bei der Druckgaserzeugung für den Betrieb einer solchen Anlage führt.

Aufgabe der vorliegenden Erfindung ist es deshalb, eine Vorrichtung der eingangs genannten Art so zu verbessern, daß ein Aufwickeln von Folie auf eine der Walzen einer Einzugsvorrichtung für Bänder, Folien und Bahnen mit Hilfe von Druckgasströmungen zuverlässig verhindert wird, wobei durch Erhöhung der Effizienz der Druckgasströmung ein weitgehend reduzierter Verbrauch an Druckgas erreicht wird und somit Betriebskosten eingespart werden können.

Erfindungsgemäß wird diese Aufgabe dadurch gelöst, daß die Abstreifer mit internen Luftkanälen versehen sind, die von Druckgas durchströmt werden können und die im Bereich der vorderen Außenkante düsenförmige Öffnungen aufweisen, durch die das Druckgas unmittelbar an die Einzugswalzen herangeführt werden kann.

In einer vorteilhaften Ausgestaltung sind die Einzugswalzen auf ihrem Umfang mit Nuten versehen, die im Bereich der axialen Positionen der düsenförmigen Öffnungen des zugehörigen Abstreifers angeordnet sind. Dadurch wird erreicht, daß der durch den aus den düsenförmigen Öffnungen im Bereich der vorderen Außenkante des Abstreifers austretende Druckgasstrahl durch die Umfangsnuten hindurchtritt und so eine an der Walze anhaftende Folie hinterspülen kann. Dabei wird die Folie von der Einzugswalze abgeblasen und vor den Abstreifer geführt. So wird ein Aufwickeln der Folie zuverlässig verhindert.

Je nach Form und Größe der zu verarbeitenden Folien können eine oder mehrere Nuten am Umfang der Einzugswalzen angebracht sein. Jeder vorhandenen Nut ist dabei eine Austrittsöffnung an der Außenkante des Abstreifers zugeordnet.

Durch die Erzeugung eines exakt gezielten Strahls an wenigen definierten Stellen ist eine störungsfreie Arbeitsweise der Einzugsvorrichtung bei minimalem Druckgasverbrauch gewährleistet. Es hat sich gezeigt, daß die erfindungsgemäße Vorrichtung insbesondere bei sehr schnell laufenden Einzugswalzen mit bis zu 300 m/min vorteilhaft ist.
Fig. 1 zeigt den Querschnitt einer erfindungsgemäßen Einzugsvorrichtung.
Fig. 2 zeigt eine vergrößerte Darstellung des erfindungsgemäßen Abstreifers.
Fig. 3 zeigt die Seitenansicht einer erfindungsgemäßen Einzugsvorrichtung.

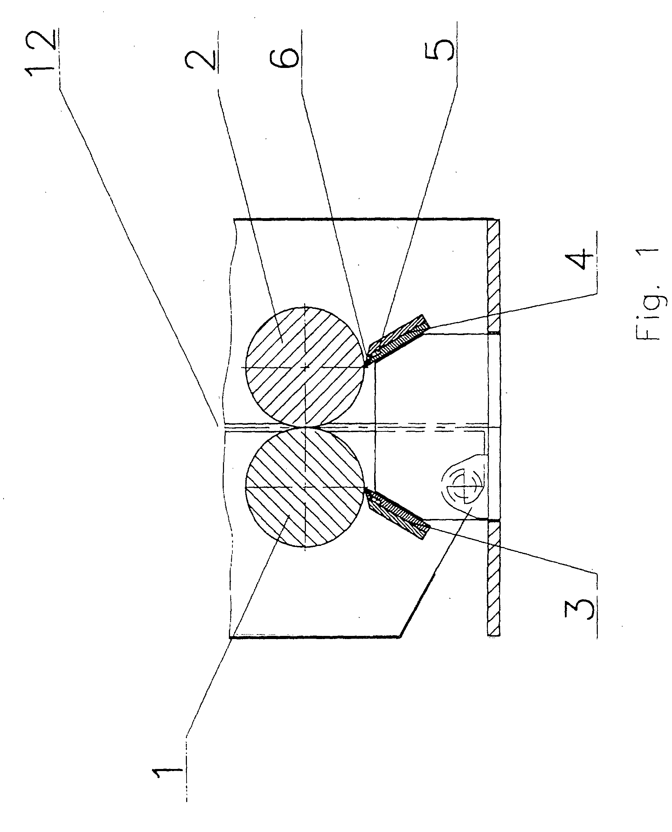

Der Querschnitt gemäß Fig. 1 zeigt das parallel angeordnete Walzenpaar gleichen Durchmessers, dessen synchron aber in entgegengesetzter Drehrichtung umlaufende Walzen **1** und **2** einen Einzugsspalt **12** begrenzen. Unterhalb der Walzen **1** und **2** ist je ein Abstreifer **3** und **4** angeordnet.

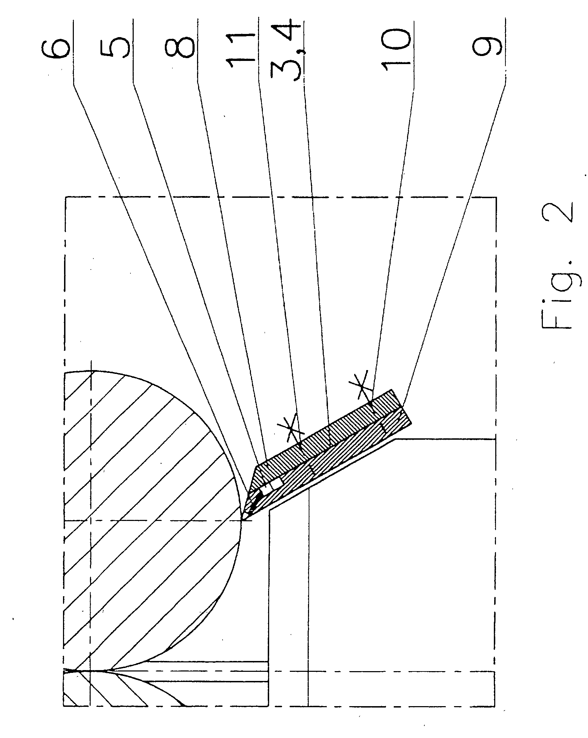

Wie aus Fig. 2 ersichtlich besteht jeder Abstreifer **3,4** aus zwei Flachstählen **8** und **9**, die flächig durch Schrauben **10** und **11** lösbar miteinander verbunden sind. Einer der Flachstähle **(9)** weist an seiner inneren Oberfläche eine Nut **5** auf, die sich über die gesamte Länge des Abstreifers **3,4** erstreckt. Jede Nut **5** stellt einen internen Luftkanal dar, der von Druckgas durchströmt wird und in der Funktion eines Leitund Verteilungskanals die einzelnen Düsenöffnungen **6** mit Druckgas versorgt.

Über die gesamte Länge jeden Abstreifers **3** und **4** sind mehrere Düsenöffnungen 6 in Abstand zueinander angeordnet. Je nach Eigenschaft der einzuziehenden Folie (z.B. Folienbreite und Foliendicke) sind die Düsenöffnungen **6** in einem kleineren oder größeren Abstand zueinander angeordnet. Um den Druckgasverbrauch zu minimieren sollen möglichst wenige Düsenöffnungen **6** über die Länge des Abstreifers eingesetzt werden. Es muß jedoch in jedem Fall sichergestellt sein, daß bei Verwendung von z.B. sehr schmalen Folien mindestens 1 bis 2 Düsenöffnungen **6** im Bereich der eingezogenen Folienbreite angeordnet sind. Die Anzahl der Düsenöffnungen **6** richtet sich somit nach der Art der zu verarbeitenden Folien.

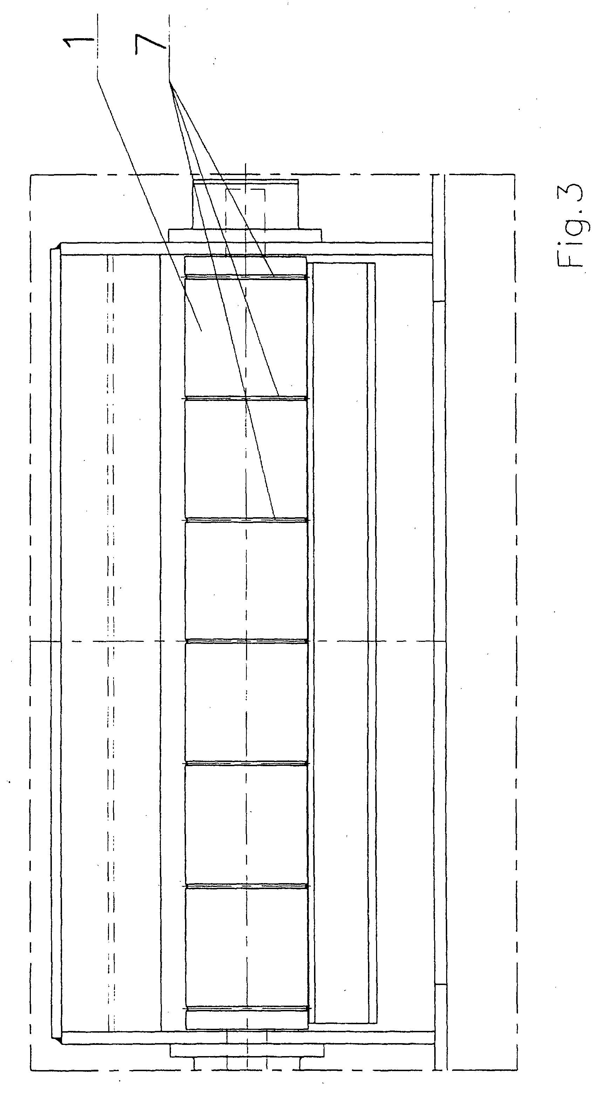

In Fig. 3 ist in der Seitenansicht eine der umlaufenden Walzen **1** und **2** dargestellt. Jede Walze **1** oder **2** ist mit mehreren radial verlaufenden Nuten **7** ausgestattet, die in Abstand zueinander, über die gesamte Länge der Walze **1** oder **2** angeordnet sind. In dieser vorteilhaften Ausgestaltung ist jeder Düsenöffnungen **6** eine an der zugehörigen Walze **1** oder **2** angebrachte Nut **7** zugeordnet, so daß der Druckgasstrom in die Nut **7** geleitet wird und die anhaftende Folie hinterspült und so von der Walze **1** oder **2** abhebt. Die abgehobene Folie kann dann sehr leicht von den Abstreifern **3,4** weiter geführt werden.

## Patentansprüche

1. Einzugsvorrichtung mit einem parallel angeordneten Walzenpaar (1,2) gleichen Durchmessers, dessen synchron aber in entgegengesetzter Drehrichtung umlaufende Walzen (1,2) einen Einzugsspalt (12) begrenzen zum Einziehen und Zuführen von Bändern, Folien und Bahnen aus unterschiedlichem Material in einen Folienzerkleinerer, insbesondere einen Schneidgranulator, mit unterhalb der Walzen (1,2) angeordneten Abstreifern (3,4) zu beiden Seiten des Einzugsspaltes (12) **dadurch gekennzeichnet, daß** die Abstreifer (3,4) mit internen Luftkanälen (5) versehen sind, die von Druckgas durchströmt werden können und die Abstreifer (3,4) düsenförmige Öffnungen (6) aufweisen, durch die das Druckgas unmittelbar an die Einzugswalzen (1,2) herangeführt werden kann.

2. Einzugsvorrichtung nach Anspruch 1, **dadurch gekennzeichnet, daß** die düsenförmigen Öffnungen (6) den Druckgasstrom an wenigen einzelnen Punkten der Walzenlänge freigeben.

3. Einzugsvorrichtung nach Anspruch 1 oder 2, **dadurch gekennzeichnet, daß** die düsenförmigen Öffnungen (6) im Bereich der vorderen, der Folie zugewandten Außenkante der Abstreifer (3,4) angeordnet sind.

4. Einzugsvorrichtung nach Anspruch 2 oder 3, **dadurch gekennzeichnet, daß** die Einzugswalzen (1,2) auf ihrem Umfang mit radial verlaufenden Nuten (7) versehen sind, die im Bereich der axialen Positionen der düsenförmigen Öffnungen (6) des zugehörigen Abstreifers (3,4) angeordnet sind.

## Claims

1. Intake unit with a pair of rollers (1,2) of identical diameter arranged parallel to each other, whereby the rollers (1,2) rotate synchronously but in opposite directions and delimit an intake gap (12) designed to draw in and feed tapes, film, foil and webs made of different materials into a film/foil size reduction unit, especially a cutting granulator, with strippers (3,4) arranged underneath the rollers (1,2) on either side of the intake gap (12) **characterised in that** the strippers (3,4) have internal air channels (5) which can be charged with compressed gas, and that the strippers (3,4) display nozzle-shaped apertures (6) through which the compressed gas can be routed direct to the intake rollers (1,2).

2. Intake unit in accordance with Claim 1 **characterised in that** the nozzle-shaped apertures (6) allow the compressed gas to escape at only a few individual points along the length of the roller.

3. Intake unit in accordance with Claim 1 or 2 **characterised in that** the nozzle-shaped apertures (6) are located on the front outside edge of the strippers (3,4) which faces the film.

4. Intake unit in accordance with Claim 2 or 3 **characterised in that** the intake rollers (1,2) have grooves (7) running in radial direction around their circumference which are located close to the axial positions of the nozzle-shaped apertures (6) of the respective stripper (3,4).

## Revendications

1. Dispositif d'alimentation avec une paire de cylindres (1, 2) montés en parallèle, de diamètres égaux, dont les cylindres (1, 2) marchant en synchronisme, mais en sens de rotation inverse, limitent un entrefer d'alimentation (12) destiné à l'entrée et l'amenée de rubans, films et lés de matière différente à un désintégrateur de films, notamment un granulateur à couteaux, avec des racles (3, 4) disposées en dessous des cylindres (1, 2) aux deux côtés de l'entrefer d'alimentation (12), **caractérisé en ce que** les racles (3, 4) sont équipées de canaux internes d'air (5) qui peuvent être passés par du gaz comprimé et **en ce que** les racles (3, 4) disposent d'ouvertures en forme de buse (6) par lesquelles le gaz comprimé peut être amené directement aux cylindres d'alimentation (1, 2).

2. Dispositif d'alimentation selon la revendication 1, **caractérisé en ce que** les ouvertures en forme de buse (6) ne laissent sortir le courant de gaz comprimé qu'à peu de points singuliers, situés sur la longueur des cylindres.

3. Dispositif d'alimentation selon la revendication 1 ou 2, **caractérisé en ce que** les ouvertures en forme de buse (6) disposées dans la zone du bord avant extérieur des racles (3, 4), sont dirigées vers le film.

4. Dispositif d'alimentation selon la revendication 2 ou 3, **caractérisé en ce que** les cylindres d'alimentation (1, 2) ont des rainures radiales (7) sur leur circonférence, qui sont disposées dans la zone des positions axiales des ouvertures en forme de buse (6) de la racle correspondante (3, 4).
